# EUROPEAN PATENT APPLICATION

(11) **EP 4 848 630 A1**
(43) Date of publication of application: **02.12.2026**
(21) Application number: 25751482.8
(22) Date of filing: 05.02.2025
(51) Int. Cl.: H04L 1/00

(54) **COMMUNICATION METHOD AND COMMUNICATION APPARATUS**

(30) Priority: 08.02.2024 CN 202410179991
(71) Applicant: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN)
(74) Representative: Huawei European IPR
(86) International application number: PCT/CN2025/075735
(87) International publication number: WO 2025/167882

(57) **Abstract**

A communication method and a communication apparatus are provided. The method includes: first information includes a transport block obtained by performing outer-code encoding on second information, and the first information is interleaved for transmission based on a transport block-wise interleaving parameter. Further, a terminal receives, based on a transport block-wise interleaving parameter from a network device, the first information that is interleaved for transmission, and performs outer-code decoding on the first information to obtain the second information. By transmitting the first information according to the communication method, transport blocks in the first information that are affected by burst blocking can be reduced, thereby helping improve transmission efficiency while reducing the impact of burst blocking.

## Description

This application claims priority to Chinese Patent Application No. 202410179991.8, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

During a transmission process in which a transmitter and a receiver perform data transmission, a blocking object (for example, a road sign or a street lamp) may cause burst (or short-term) blocking to a signal, resulting in a sudden decrease in the signal-to-noise ratio (signal-to-noise ratio, SNR) of the data transmission link. Consequently, decoding errors may occur or a quantity (probability) of data retransmissions may increase.

Generally, outer-code (outer-code) encoding may be performed on data at the media access control (media access control, MAC) layer/physical (physical, PHY) layer, that is, by adding a parity TB based on a data transport block (transport block, TB), to mitigate the impact of burst blocking caused by the blocking object.

Generally, a quantity of parity TBs needs to be greater than or equal to a quantity of TBs affected by blocking. However, as the quantity of parity TBs increases, transmission efficiency decreases. When the blocking duration is long (that is, a large quantity of TBs are affected by blocking), how to improve transmission efficiency while reducing the impact of burst blocking remains an urgent problem to be resolved.

### SUMMARY

Embodiments of this application provide a communication method and a communication apparatus, to help improve transmission efficiency while reducing the impact of burst blocking.

According to a first aspect, this application provides a communication method. The method may be applied to a terminal side, for example, a terminal, a communication module in a terminal, or a circuit or chip (for example, a modem (modem) chip, also referred to as a baseband (baseband) chip, or a system on chip (System on Chip, SoC) chip or a system in package (System in Package, SIP) chip including a modem core) responsible for a communication function in the terminal. For example, the method is applied to the terminal. The method includes: The terminal receives, based on a transport block-wise interleaving parameter, first information that is interleaved for transmission. The transport block-wise interleaving parameter is from a network device, and the first information includes a transport block obtained by performing outer-code encoding on second information. Further, the terminal performs outer-code decoding on the first information, to obtain the second information.

According to the method described in the first aspect, the first information may be interleaved for transmission based on the transport block-wise interleaving parameter. After obtaining the transport block-wise interleaving parameter from the network device, the terminal receives the first information based on the interleaving parameter, and decodes the first information, to obtain the second information. Compared with a manner in which the first information is not transmitted through transport block-wise interleaving, a manner in which the first information is transmitted through transport block-wise interleaving helps reduce transport blocks, in the first information, that are affected by burst blocking, thereby improving transmission efficiency while reducing the impact of burst blocking.

In a possible implementation, the first information further includes a first parity transport block, the first parity transport block is generated based on the second information, and a quantity of first parity transport blocks is less than or equal to a quantity of transport blocks affected by blocking, or a transmission duration of the first parity transport block is less than or equal to a transmission duration affected by blocking. According to this possible implementation, the first parity transport block included in the first information can be reduced, that is, redundant information in the first information can be reduced, thereby improving transmission efficiency.

In a possible implementation, the terminal receives third information from the network device, where the third information indicates one or more of a first quantity, a second quantity, or a start position, the first quantity indicates a quantity of transport blocks in the first information other than the first parity transport block, the second quantity indicates the quantity of first parity transport blocks in the first information, and the start position indicates a start resource position of the first information.

In a possible implementation, after receiving the third information, the terminal receives, based on the third information and the transport block-wise interleaving parameter, the first information that is interleaved for transmission.

In a possible implementation, the terminal sends fourth information to the network device, where the fourth information indicates a quantity of erroneous transport blocks. Further, the terminal receives a second parity transport block from the network device, where the second parity transport block is generated based on the second information, and a quantity of second parity transport blocks is greater than or equal to the quantity of errors. Then, the terminal performs outer-code decoding based on the first information and the second parity transport block, to obtain the second information. According to this possible implementation, when the transport block (that is, the first information) corresponding to the second information is initially transmitted, the first information may not include a parity transport block generated based on the second information. This helps improve resource utilization and improve transmission efficiency. After the terminal receives an error in the transport block (that is, the transport block included in the first information that is interleaved for transmission), the terminal sends, to the network device, the fourth information indicating the quantity of erroneous transport blocks, further receives the second parity transport block whose quantity is greater than or equal to the quantity of error transport blocks, and recovers the second information based on the second parity transport block and the first information. This helps improve transmission reliability.

In a possible implementation, the interleaving parameter includes a first parameter corresponding to an interleaver and a second parameter corresponding to the interleaver, the first parameter indicates a quantity of rows of an interleaving block, and the second parameter indicates a quantity of columns of the interleaving block; or the interleaving parameter includes the first parameter, the second parameter, and first indication information, where the first indication information indicates a quantity of columns occupied by the first information in the interleaving block, or the first indication information indicates a position of a column occupied by the first information in the interleaving block.

In a possible implementation, the interleaving parameter includes a third parameter and a fourth parameter, the third parameter indicates a quantity of transport block groups included in the first information, and the fourth parameter indicates an interval between two adjacent transport block groups; or the interleaving parameter includes the third parameter, the fourth parameter, and second indication information, where the second indication information indicates a quantity of transport blocks included in each transport block group in the first information, or the second indication information indicates a position of a transport block included in each transport block group in the first information.

In a possible implementation, the interleaving parameter is carried in any one of the following messages: a system message, a master information block, or a physical broadcast channel message.

In a possible implementation, the terminal receives third indication information from the network device, where the third indication information indicates to activate or deactivate the interleaving parameter, or the third indication information indicates to activate or deactivate a transport block-wise interleaving process. According to this possible implementation, whether the first information is interleaved for transmission based on the interleaving parameter may be indicated based on the third indication information, thereby improving flexibility of a transmission manner of the first information.

According to a second aspect, this application provides a communication method. The method may be applied to a network side, for example, a network device on the network side or a component (for example, a circuit, a chip, or a chip system) in a network device. For example, the method is applied to the network device. The method includes: The network device determines first information, and sends, based on a transport block-wise interleaving parameter, first information that is interleaved for transmission. The first information includes a transport block obtained by performing outer-code encoding on second information.

According to the method described in the second aspect, the first information may be interleaved for transmission based on the transport block-wise interleaving parameter. Compared with a manner in which the first information is not transmitted through transport block-wise interleaving, a manner in which the first information is transmitted through transport block-wise interleaving helps reduce transport blocks, in the first information, that are affected by burst blocking, thereby improving transmission efficiency while reducing the impact of burst blocking. For beneficial effect achieved by the implementation according to the second aspect, refer to the beneficial effect achieved by the implementation described in the first aspect. Details are not described in the following.

In a possible implementation, the first information includes a first parity transport block, the first parity transport block is generated based on the second information, and a quantity of first parity transport blocks is less than or equal to a quantity of transport blocks affected by blocking, or a transmission duration of the first parity transport block is less than or equal to a transmission duration affected by blocking.

In a possible implementation, the network device sends third information to a terminal, where the third information indicates one or more of a first quantity, a second quantity, or a start position, the first quantity indicates a quantity of transport blocks in the first information other than the first parity transport block, the second quantity indicates the quantity of first parity transport blocks in the first information, and the start position indicates a start resource position of the first information.

In a possible implementation, the network device sends, based on the third information and the transport block-wise interleaving parameter, the first information that is interleaved for transmission.

In a possible implementation, the network device receives fourth information from a terminal, where the fourth information indicates a quantity of erroneous transport blocks included in the first information. Further, the network device sends a second parity transport block to the terminal, where the second parity transport block is generated based on the second information, and a quantity of second parity transport blocks is greater than or equal to the quantity of errors.

In a possible implementation, the interleaving parameter includes a first parameter corresponding to an interleaver and a second parameter corresponding to the interleaver, the first parameter indicates a quantity of rows of an interleaving block, and the second parameter indicates a quantity of columns of the interleaving block; or the interleaving parameter includes the first parameter, the second parameter, and first indication information, where the first indication information indicates a quantity of columns occupied by the first information in the interleaving block, or the first indication information indicates a position of a column occupied by the first information in the interleaving block.

In a possible implementation, the interleaving parameter includes a third parameter and a fourth parameter, the third parameter indicates a quantity of transport block groups included in the first information, and the fourth parameter indicates an interval between two adjacent transport block groups; or the interleaving parameter includes the third parameter, the fourth parameter, and second indication information, where the second indication information indicates a quantity of transport blocks included in each transport block group in the first information, or the second indication information indicates a position of a transport block included in each transport block group in the first information.

In a possible implementation, the interleaving parameter is carried in any one of the following messages: a system message, a master information block, or a physical broadcast channel message.

In a possible implementation, the network device sends third indication information to the terminal, where the third indication information indicates to activate or deactivate the interleaving parameter.

According to a third aspect, this application provides a communication apparatus. The communication apparatus may perform the method according to the first aspect. A function of the communication apparatus may be implemented by hardware, or may be implemented by hardware by executing corresponding software. The hardware or software includes one or more units or modules corresponding to the foregoing functions. The unit or module may be software and/or hardware. For operations performed by the communication apparatus and beneficial effect, refer to the method and the beneficial effect in the first aspect.

According to a fourth aspect, this application provides a communication apparatus. The communication apparatus includes a memory and one or more processors. The memory is configured to store a part or all of a computer program or instructions necessary for implementing the functions in the first aspect. The one or more processors may execute the computer program or instructions. When the computer program or the instructions are executed, the communication apparatus is enabled to implement the method according to any possible design or implementation of the first aspect or the second aspect.

In a possible design, the communication apparatus may further include an interface circuit. The processor is configured to communicate with another apparatus or component through the interface circuit.

In a possible design, the communication apparatus may further include the memory.

The communication apparatus may be a terminal, a communication module in a terminal, or a chip, for example, a modem chip (also referred to as a baseband chip), that is in a terminal and that is responsible for a communication function, or a SoC or a SIP chip that includes a modem module.

According to a fifth aspect, this application provides a communication apparatus. The communication apparatus may be a network device, an apparatus in a network device, or an apparatus that can be used in combination with a network device. The communication apparatus may alternatively be a chip system. The communication apparatus may perform the method according to the second aspect. A function of the communication apparatus may be implemented by hardware, or may be implemented by hardware by executing corresponding software. The hardware or software includes one or more units or modules corresponding to the foregoing functions. The unit or module may be software and/or hardware. For operations performed by the communication apparatus and beneficial effect, refer to the method and the beneficial effect in the second aspect.

According to a sixth aspect, this application provides a communication apparatus. The communication apparatus includes a processor and an interface circuit. The interface circuit is configured to: receive a signal from another communication apparatus and transmit the signal to the processor, or send a signal from the processor to another communication apparatus. The processor is configured to implement the method according to the first aspect through a logic circuit or by executing code instructions, or the processor is configured to implement the method according to the second aspect through a logic circuit or by executing code instructions.

According to a seventh aspect, this application provides a computer-readable storage medium. The storage medium stores a computer program or instructions, and when the computer program or the instructions are executed by a communication apparatus, the method according to the first aspect is implemented, or the method according to the second aspect is implemented.

According to an eighth aspect, this application provides a computer program product including instructions. When a communication apparatus reads and executes the instructions, the communication apparatus is enabled to perform the method according to the first aspect, or the communication apparatus is enabled to perform the method according to the second aspect.

According to a ninth aspect, this application provides a communication system, including a communication apparatus configured to perform the method according to the first aspect and a communication apparatus configured to perform the method according to the second aspect.

### BRIEF DESCRIPTION OF DRAWINGS

FIG. 1 is a diagram of a communication system according to an embodiment of this application;
FIG. 2A to FIG. 2D each are a diagram of an NTN-based RAN architecture according to an embodiment of this application;
FIG. 3 is a block diagram of transmission in an OFDM system according to an embodiment of this application;
FIG. 4A to FIG. 4D are a schematic flowchart of outer-code encoding according to an embodiment of this application;
FIG. 5 is a diagram of simulation about a decoding failure probability according to an embodiment of this application;
FIG. 6 is a diagram in which a TB is affected by blocking according to an embodiment of this application;
FIG. 7A to FIG. 7D each are a diagram of interleaving according to an embodiment of this application;
FIG. 8A and FIG. 8B are another diagram of interleaving according to an embodiment of this application;
FIG. 9 is a schematic flowchart of a communication method according to an embodiment of this application;
FIG. 10A and FIG. 10B are still another diagram of interleaving according to an embodiment of this application;
FIG. 11 is a diagram of another OFDM transmission architecture according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

For ease of specific understanding of embodiments of this application, the following first describes a system architecture in embodiments of this application.

The technical solutions of this application may be applied to a terrestrial network (terrestrial network, TN), a non-terrestrial network (non-terrestrial network, NTN), or a scenario in which an NTN and a TN are integrated. An NTN system may be, for example, a satellite communication system, a high altitude platform station (high altitude platform station, HAPS) communication system, or a global navigation satellite system (global navigation satellite system, GNSS). For example, the TN system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new and NR) system), or a future mobile communication system.

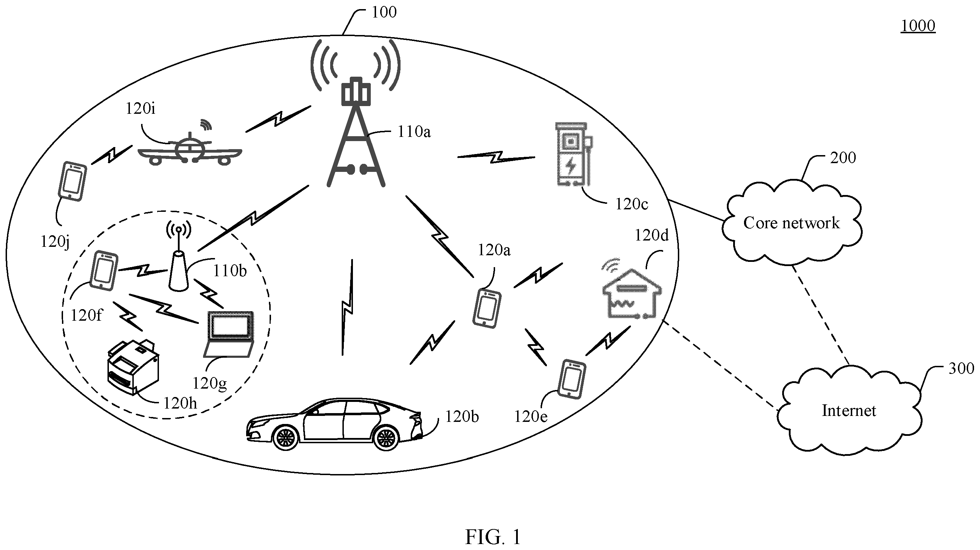

The following uses a system architecture shown in FIG. 1 as an example for description. FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may alternatively include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be the same physical device that integrates a logical function of the core network device and a logical function of the RAN node. The terminals may be connected to each other in a wired or wireless manner and the RAN nodes may be connected to each other in a wired or wireless manner. It should be noted that the RAN node 110 may also be referred to as a network device 110 in the following.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

A RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or a part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into the same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a Discrete Fourier Transform-spread-OFDM (Discrete Fourier Transform-spread-OFDM, DFT-s-OFDM) symbol. Unless otherwise specified, symbols in embodiments of this application are time domain symbols.

For ease of understanding related content in embodiments of this application, the following further explains and describes some terms in embodiments of this application. This part is merely for ease of understanding, and cannot be considered as a disclosure or a specific limitation on the technical solutions of this application.

### 1. NTN

In the NTN, a base station or some functions of the base station are deployed on a non-terrestrial network device (for example, a ship, a high altitude platform, an uncrewed aerial vehicle, or a satellite), to provide seamless communication coverage for a terminal device. This improves reliability of a communication system. It should be noted that, for ease of understanding, only an example in which the non-terrestrial network device in the NTN is the satellite is used below for description, and this should not be considered as a specific limitation on this application.

According to an orbital altitude of a satellite, a satellite communication system may be classified into three types: a geostationary earth orbit (geostationary earth orbit, GEO) satellite communication system, which is also referred to as a synchronous orbit satellite system; a medium earth orbit (medium earth orbit, MEO) satellite communication system; and a low earth orbit (low earth orbit, LEO) satellite communication system.

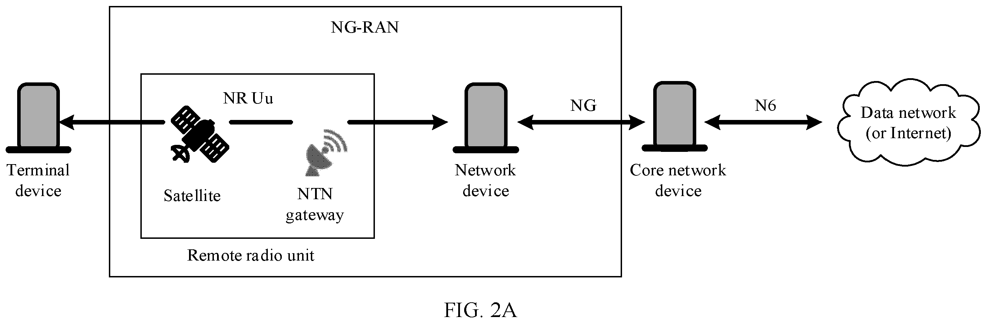

For example, FIG. 2A to FIG. 2D each are a diagram of an NTN-based RAN architecture to which embodiments of this application are applicable. As shown in FIG. 2A to FIG. 2D, the NTN-based RAN architectures may include a terminal device, a RAN (or referred to as an NG-RAN), a core network device, and a data network (or the Internet).

FIG. 2A shows an architecture of a transparent satellite (transparent satellite). A RAN may include an RRU and a network device. An RRU may include a satellite and an NTN gateway (gateway). A terminal device communicates with a network device through a universal terrestrial radio access network-user (universal terrestrial radio access network-user, Uu) interface. The satellite may implement transparent payload transmission between a user and the network device. The satellite and the NTN gateway may be considered as remote radio units (remote radio units) of the network device, and implement transparent forwarding of a signal. In other words, the satellite supports functions such as radio frequency filtering, frequency conversion, and amplification, with a signal waveform remaining unchanged. Forwarding of the satellite is transparent to the terminal device, that is, the satellite mainly serves as a relay device (L1 relay) at a layer 1 (L1 for short), is configured to regenerate (that is, perform wireless frequency filtering, frequency conversion, and amplification on) a physical layer signal, and does not have another higher protocol layer. The network device and the core network device may communicate with each other through a next generation (next generation, NG) interface, and exchange non-access stratum (non-access stratum, NAS) signaling of a core network and service data of the terminal device through the NG interface.

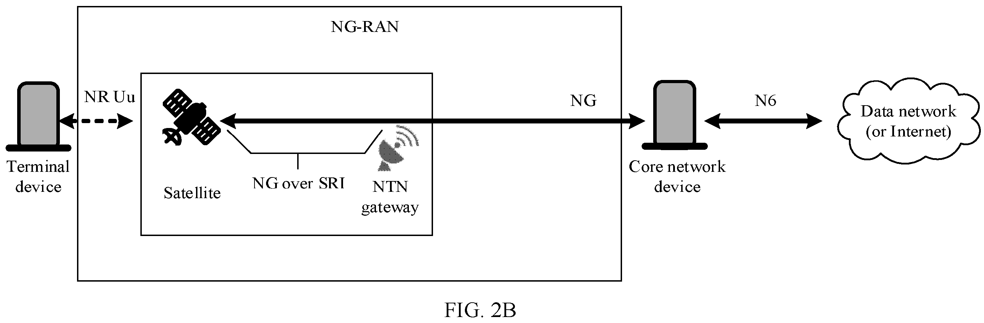

FIG. 2B shows an architecture of a regenerative satellite without an inter-satellite link (regenerative satellite without inter-satellite link). A RAN includes the satellite and an NTN gateway. The satellite serves as a network device (for example, a base station) and has a processing function of the base station. The satellite communicates with the NTN gateway through a satellite radio interface (satellite radio interface, SRI). A terminal device communicates with the network device through a Uu interface. The network device and a core network device may communicate with each other through an NG interface, and exchange NAS signaling of a core network and service data of the terminal device through the NG interface.

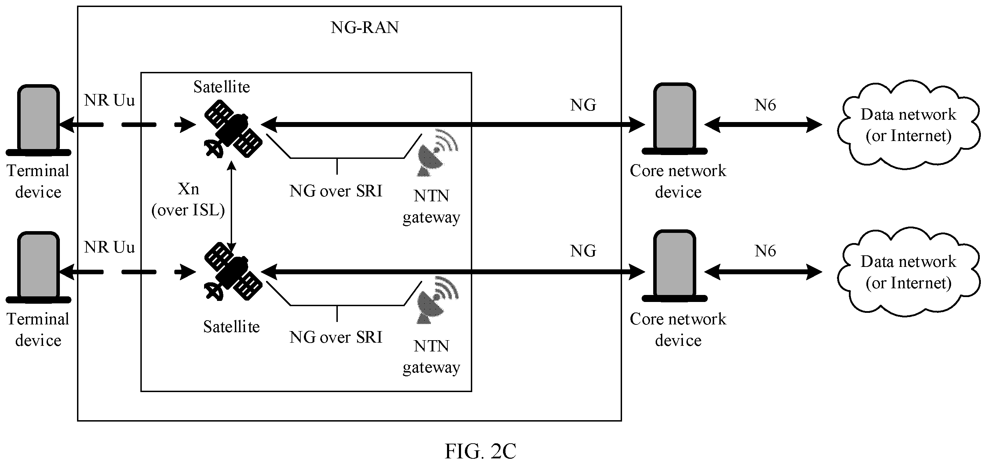

FIG. 2C shows an architecture of a regenerative satellite with an inter-satellite link (regenerative satellite with inter-satellite link). A RAN includes the satellite and an NTN gateway. The satellite serves as a network device (for example, a base station) and has a processing function of the base station. The satellite communicates with the NTN gateway through an SRI. Satellites may communicate with each other through an Xn interface on an inter-satellite link (inter-satellite link, ISL). A terminal device communicates with the network device through a Uu interface. The network device and a core network device may communicate with each other through an NG interface, and exchange NAS signaling of a core network and service data of the terminal device through the NG interface.

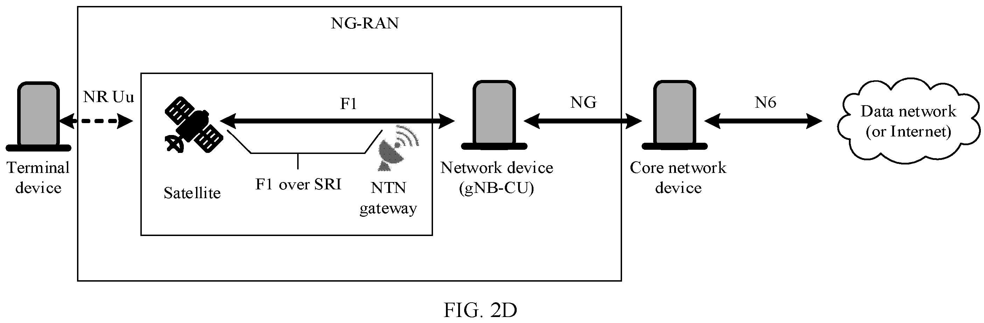

FIG. 2D shows an architecture of a regenerative satellite with a DU processing function of a base station. The satellite serves as a DU and has the DU processing function. A CU and the DU may jointly complete a function of a network device (for example, the base station). The CU communicates with the DU through an F1 interface, and the DU communicates with an NTN gateway through an F1 interface on an SRI. A terminal device communicates with the DU through a Uu interface. The CU and a core network device may communicate with each other through an NG interface, and exchange NAS signaling of a core network and service data of the terminal device through the NG interface.

For example, in an architecture of a satellite having an integrated access and backhaul (integrated access and backhaul, IAB) function, the satellite serves as an IAB node. The IAB node is configured to provide a wireless backhaul (backhaul) service for a node (for example, a terminal device) that accesses a wireless backhaul node in a wireless manner. The wireless backhaul service is a data and/or signaling backhaul service provided through a wireless backhaul link.

### 2. OFDM technology

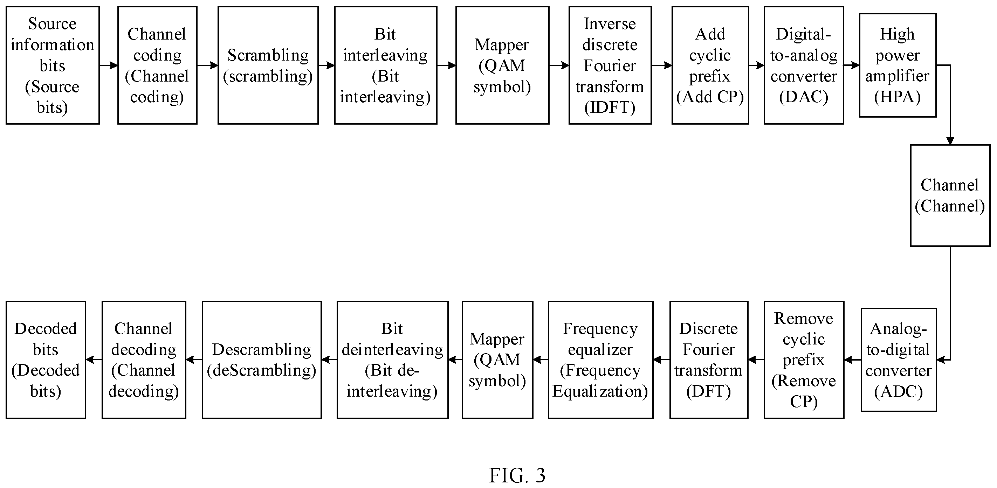

FIG. 3 is a block diagram of transmission in an OFDM system according to this application. The OFDM system includes modules such as channel coding, scrambling, and bit interleaving. It should be noted that the OFDM system may further include modules such as channel estimation (not shown in FIG. 3). This is not limited in this application.

At the transmitter, cyclic redundancy check (cyclic redundancy check, CRC) is added to the source information bits, and then channel coding (channel coding) is performed on obtained information bits, to obtain encoded bits. Then, scrambling processing is performed on the encoded bits, and bits obtained through scrambling processing are input to the bit interleaving module; and bit interleaving is performed within a range of the code block, so that a burst error introduced by a channel within the range of the code block can be converted into a random error, and the burst error can be dispersed, to help successfully decode at the receiver. Then, the interleaved bits are mapped to quadrature amplitude modulation (quadrature amplitude modulation, QAM) signals via a mapper, and then inverse discrete Fourier transform (inverse discrete Fourier transform, IDFT) is performed on the QAM signals to transform the signals into time domain. After a cyclic prefix (cyclic prefix, CP) is added, the signals are converted into continuous-time signals via a digital-to-analog converter (digital-to-analog converter, DAC), and then the continuous-time signals are amplified via a high power amplifier (high power amplifier, HPA) for transmission. The signal reaches a receiver through a TN channel or an NTN channel. Correspondingly, at the receiver, a received continuous-time signal is sampled and converted to a discrete-time signal through an analog-to-digital converter (analog-to-digital converter, ADC), and then discrete Fourier transform (discrete Fourier transform, DFT) processing is performed on the signal, to transform the signal into frequency domain. After frequency-domain equalization, processing such as mapping, deinterleaving, descrambling, and channel decoding is performed, to obtain decoded bits.

### 3. Outer-code encoding

Generally, the outer-code encoding method includes but is not limited to one or more of the following encoding methods: Reed-Solomon codes (Reed-Solomon codes, RS codes), fountain code (fountain code), algebraic code (algebraic code), Raptor code (Raptor code), RaptorQ code (RaptorQ code), Bose-Chaudhuri-Hocquenghem code (Bose-Chaudhuri-Hocquenghem code, BCH code), or minimum distance separable code (minimum distance separable code, MDS code). It should be noted that outer-code decoding mentioned in this application may be understood as an inverse process of outer-code encoding.

Specifically, outer-code encoding is performed on information bits (information bits) at the MAC layer or the physical layer, then low-density parity-check code (low-density parity-check code, LDPC) encoding is performed on bits obtained through outer-code encoding, and finally, LDPC encoding blocks are mapped to different slots and used as a plurality of transport blocks (transport block, TB). It should be noted that in this application, only an example in which LDPC encoding is used to perform channel coding on the bits obtained through outer-code encoding is used for description, and this should not be considered as a specific limitation on this application. In other words, a manner of encoding the bits obtained through outer-code encoding may be another manner, for example, polar code (polar code) encoding.

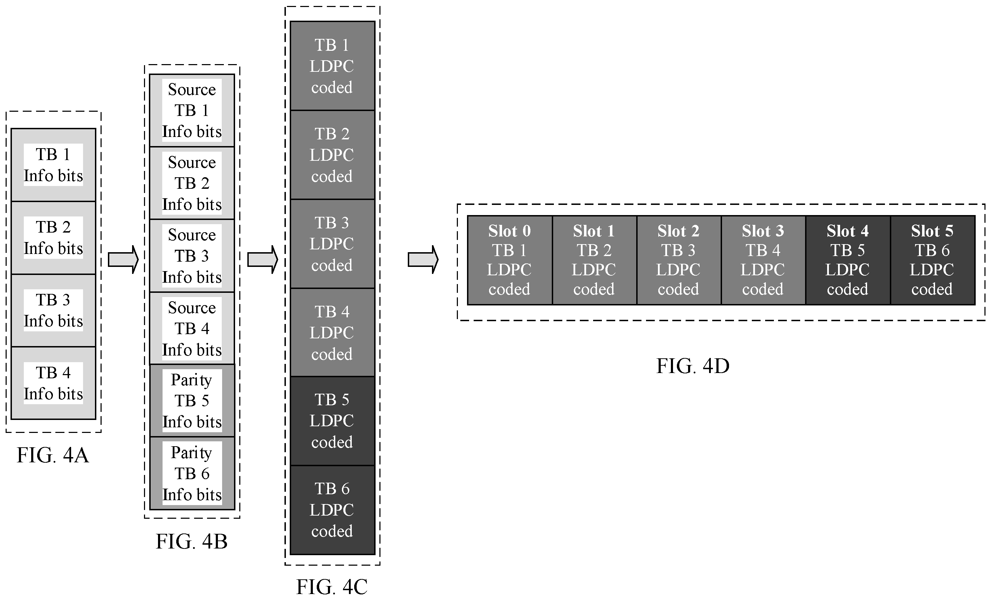

For ease of understanding, this application provides a schematic flowchart of outer-code encoding. Refer to FIG. 4A to FIG. 4D. In FIG. 4A to FIG. 4D, the MAC layer or the physical layer performs outer-code encoding on information bits of four TBs (that is, a TB 1 to a TB 4 shown in FIG. 4A), to obtain information obtained through outer-code encoding. The information obtained through outer-code encoding is shown in FIG. 4B, and includes four source TBs (that is, a source TB 1 to a source TB 4 shown in FIG. 4B) and two parity TBs (that is, a parity TB 5 and a parity TB 6 shown in FIG. 4B). It may be understood that outer-code encoding is to add two parity TBs to the four TBs shown in FIG. 4A. Information included in the source TB 1 to the source TB 4 in FIG. 4B is the same as information included in the four TBs in FIG. 4A. Information included in the two parity TBs is generated based on the information included in the four TBs shown in FIG. 4A. Further, LDPC encoding is performed on information bits of the six TBs obtained through outer-code encoding, to obtain six TBs obtained through LDPC encoding, as shown in FIG. 4C. Further, the six TBs shown in FIG. 4C are respectively mapped to six different slots shown in FIG. 4D for sending.

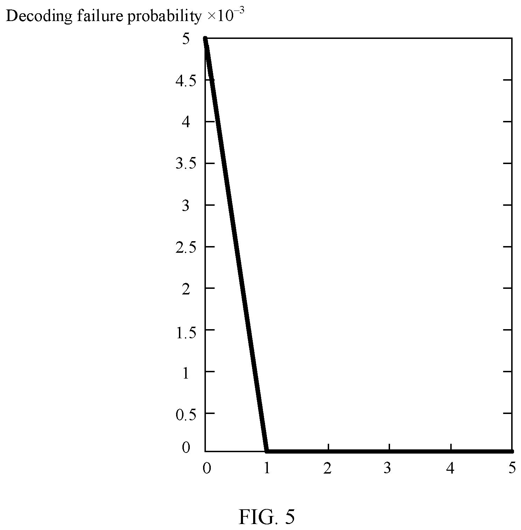

It should be understood that, because the information about the parity TB is generated based on the information about the source TB, the receiver may recover information about all the source TBs based on the information about the parity TB and information about some of the source TBs. For example, when the transmitter sends 30 source TBs and five parity TBs, a simulation result diagram of a decoding failure probability is shown in FIG. 5. When the receiver receives any 30 of the 35 TBs, an error rate of data recovery is 0.5%, that is, a probability of correctly decoding and recovering the data is 1-0.5%. When the quantity of TBs received by the receiver is greater than 30 (that is, 31 to 35), the error rate of data recovery is 0, that is, the probability of correctly decoding and recovering the data is 100%. In other words, a quantity of TBs received by the receiver is slightly greater than a quantity of source TBs. For example, if the quantity of TBs received by the receiver is one more than the quantity of source TBs, the receiver may perform decoding with a probability of 100%. For ease of description, when the quantity of TBs received by the receiver is equal to the quantity of source TBs in the following, it may be considered that the receiver can correctly perform decoding.

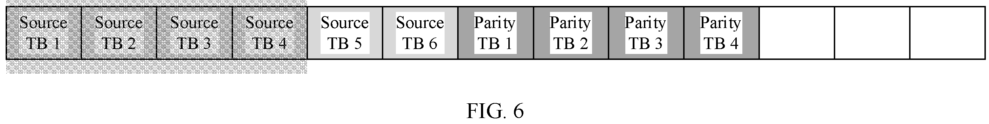

In a transmission process in which the transmitter and the receiver perform data transmission, a signal may be suddenly blocked by a blocking object, so that an SNR of a data transmission link suddenly decreases. As a result, a decoding error occurs or a quantity of data retransmissions increases. To reduce the impact of burst blocking of a signal by the blocking object, an outer-code encoding method may be introduced into a communication transmission process. For example, when the source information bits correspond to six TBs (that is, a source TB 1 to a source TB 6 in FIG. 6), four parity TBs (that is, a parity TB 1 to a parity TB 4 in FIG. 6) are generated according to the outer-code encoding method, and information obtained through outer-code encoding is shown in FIG. 6. When the quantity of TBs affected by blocking is less than or equal to four TBs, the information obtained through outer-code encoding shown in FIG. 6 is transmitted, which helps increase a probability that the receiver correctly recovers data. It may be understood that, in a scenario in which the outer-code encoding method is applied to reduce the blocking impact of a signal by the blocking object, the quantity of parity TBs usually needs to be greater than or equal to the quantity of TBs affected by blocking. When a large quantity of TBs are affected by blocking (or it is understood that a transmission duration affected by blocking is long), a large quantity of parity TBs need to be generated according to the outer-code encoding method. As a result, there is a large amount of redundant information, and transmission efficiency is reduced. For example, in the example corresponding to FIG. 6, a proportion of the quantity of parity TBs (that is, four) to the total quantity of TBs (that is, 10) is 40%, and transmission efficiency is low.

To reduce the impact of burst blocking and improve transmission efficiency, this application provides a TB-wise interleaving parameter, and provides a communication method and a communication apparatus based on the TB-wise interleaving parameter. The following first describes the TB-wise interleaving parameter.

It should be understood that the TB-wise interleaving parameter mentioned in this application is a parameter involved in an interleaving process performed by using one or more TBs as a unit. The following first describes the TB-wise interleaving parameter from the following two aspects.

Aspect 1: Content of the TB-wise interleaving parameter.

In a possible implementation #1, the TB-wise interleaving parameter includes a first parameter corresponding to an interleaver and a second parameter corresponding to the interleaver, the first parameter indicates a quantity of rows of an interleaving block, and the second parameter indicates a quantity of columns of the interleaving block.

It should be understood that the interleaver mentioned in this application is a processing procedure, module, or device used to perform an interleaving process (or referred to as an interleaving process) mentioned in this application. The interleaving block mentioned in this application may also be referred to as an interleaving matrix, and is formed by transport blocks on which the interleaver performs interleaving processing once. The quantity of rows of the interleaving block mentioned in this application may be understood as a quantity of rows of transport blocks included in the interleaving block. The quantity of columns of the interleaving block mentioned in this application may be understood as a quantity of columns of transport blocks included in the interleaving block.

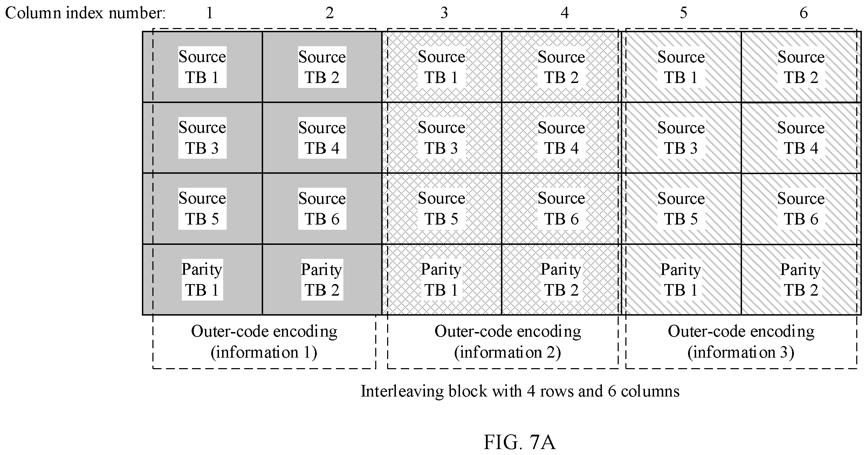

For example, FIG. 7A to FIG. 7D are a diagram of interleaving according to this application. In FIG. 7A, information 1 to information 3 obtained through outer-code encoding each include eight TBs. In a process in which the interleaver performs interleaving based on the information 1 to the information 3, the interleaving block includes 24 TBs (that is, includes all TBs of the information 1 to the information 3). In this case, the TB-wise interleaving parameter includes 4 (that is, the first parameter, indicating that the quantity of rows of the interleaving block is 4) and 6 (that is, the second parameter, indicating that the quantity of columns of the interleaving block is 6).

In a possible implementation #2, the TB-wise interleaving parameter includes the first parameter, the second parameter, and first indication information, where the first indication information indicates a quantity of columns occupied by the first information in the interleaving block, or the first indication information indicates a position of a column occupied by the first information in the interleaving block.

In other words, in the implementation #2, in addition to indicating the quantity of rows of the interleaving block and the quantity of columns of the interleaving block, the TB-wise interleaving parameter further indicates a quantity of or positions of columns occupied by each piece of interleaved information in the interleaving block. When the quantity of columns occupied by a piece of interleaved information (for example, the first information mentioned below) in the interleaving block is greater than or equal to 2, the columns occupied by the first information in the interleaving block may be consecutive (or adjacent), or may be inconsecutive. This is not specifically limited in this application. For example, when the columns occupied by the first information in the interleaving block are consecutive, the first indication information indicates a quantity of columns occupied by the first information in the interleaving block. When the columns occupied by the first information in the interleaving block are inconsecutive, the first indication information indicates a position of a column occupied by the first information in the interleaving block. For example, the first indication information is an index of the column occupied by the first information in the interleaving block.

For example, in FIG. 7A, the information 1 to the information 3 are interleaved for transmission, and columns occupied by the same information in the interleaving block are consecutive. The columns occupied by the information 1 in the interleaving block is the first column and the second column in the interleaving block, the columns occupied by the information 2 in the interleaving block is the third column and the fourth column in the interleaving block, and the columns occupied by the information 3 in the interleaving block is the fifth column and the sixth column in the interleaving block. In this case, the TB-wise interleaving parameter includes 4 (that is, the first parameter, indicating that the quantity of rows of the interleaving block is 4), 6 (that is, the second parameter, indicating that the quantity of columns of the interleaving block is 6), and 2 (that is, the first indication information, indicating that the quantity of columns occupied by each piece of information in the interleaving block is 2).

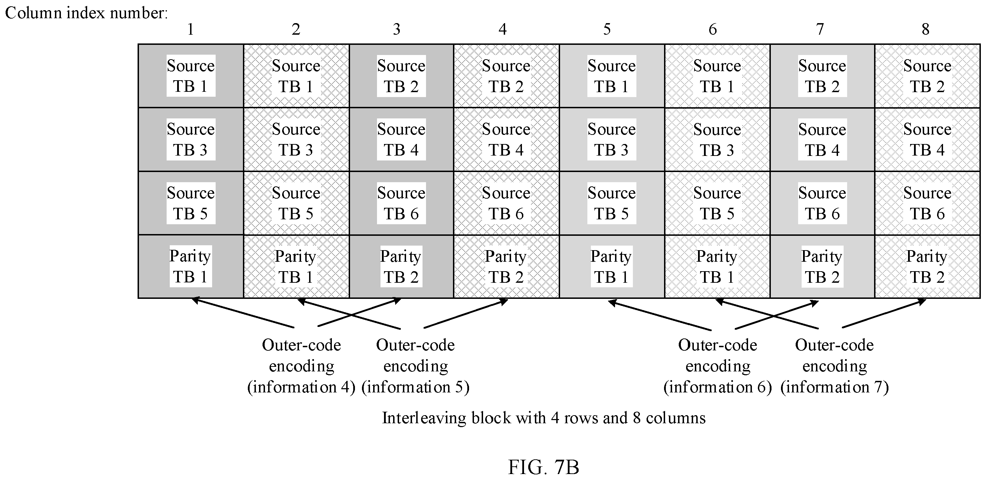

For another example, in FIG. 7B, information 4 to information 7 are interleaved for transmission, and columns occupied by the same information in the interleaving block are inconsecutive. The columns occupied by the information 4 in the interleaving block is the first column and the third column in the interleaving block, the columns occupied by the information 5 in the interleaving block is the second column and the fourth column in the interleaving block, the columns occupied by the information 6 in the interleaving block is the fifth column and the seventh column in the interleaving block, and the columns occupied by the information 7 in the interleaving block is the sixth column and the eighth column in the interleaving block. In this case, the TB-wise interleaving parameter includes 4 (that is, the first parameter, indicating that the quantity of rows of the interleaving block is 4) and 8 (that is, the second parameter, indicating that the quantity of columns of the interleaving block is 8), and content indicated by the first indication information is shown in Table 1.

**Table 1**

| Information identifier | Index number of the column occupied in the interleaving block |
|---|---|
| Information 1 | 1, 3 |
| Information 2 | 2, 4 |
| Information 3 | 5, 7 |
| Information 4 | 6, 8 |

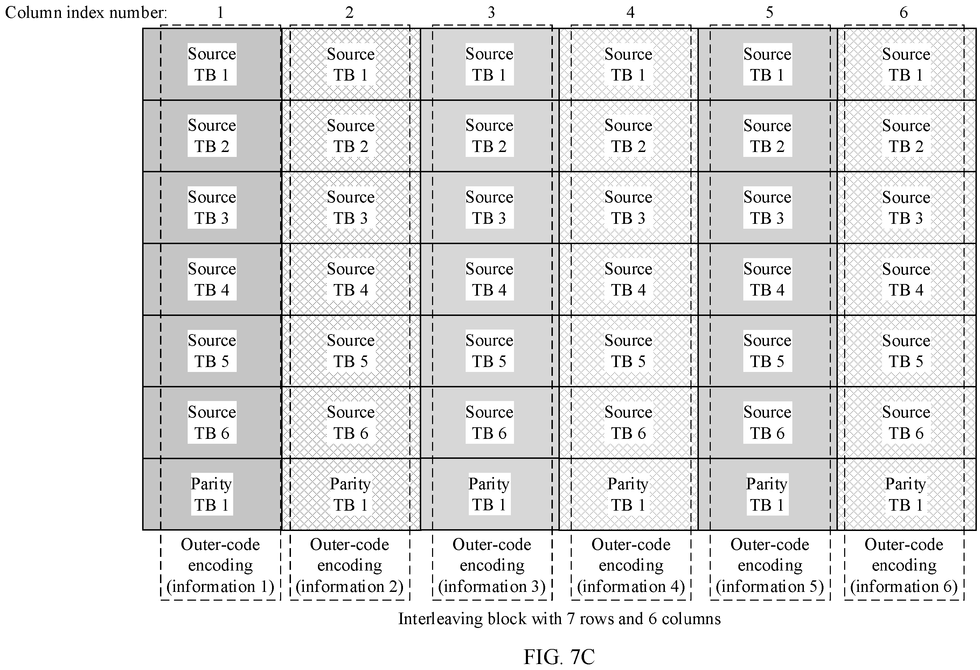

For another example, in FIG. 7C, the information 1 the information 6 obtained through outer-code encoding each include seven TBs. In a process in which the interleaver performs interleaving based on the information 1 to the information 6, the interleaving block includes 42 TBs (that is, includes all TBs of the information 1 to the information 6). In this case, the TB-wise interleaving parameter includes 7 (that is, the first parameter, indicating that the quantity of rows of the interleaving block is 7), 6 (that is, the second parameter, indicating that the quantity of columns of the interleaving block is 6), and 1 (that is, the first indication information, indicating that the quantity of columns occupied by each piece of information in the interleaving block is 1).

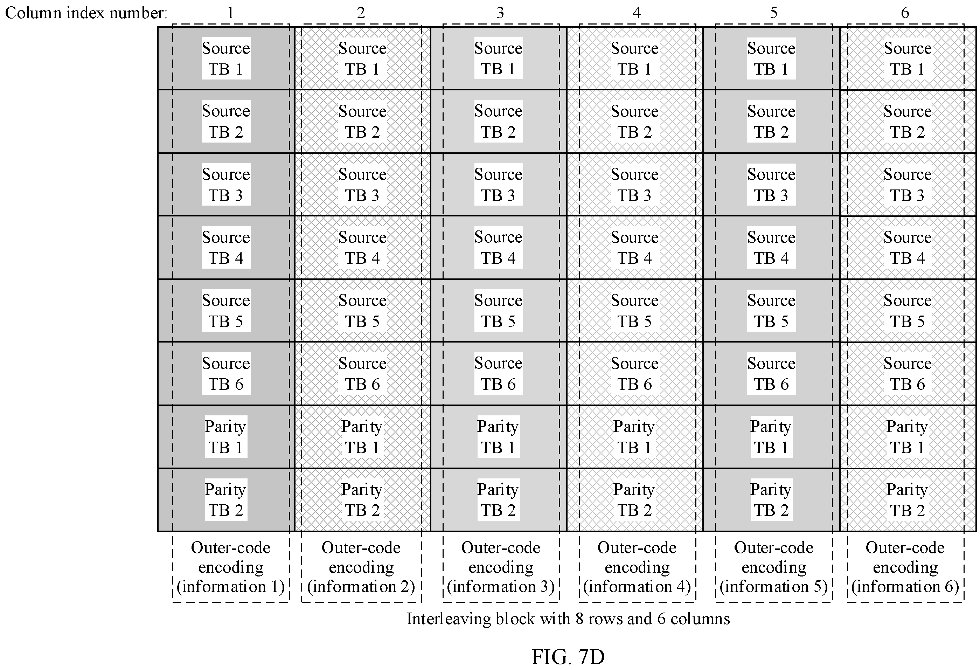

For another example, in FIG. 7D, the information 1 to the information 6 obtained through outer-code encoding each include eight TBs. In a process in which the interleaver performs interleaving based on the information 1 to the information 6, the interleaving block includes 48 TBs (that is, includes all TBs of the information 1 to the information 6). In this case, the TB-wise interleaving parameter includes 8 (that is, the first parameter, indicating that the quantity of rows of the interleaving block is 8), 6 (that is, the second parameter, indicating that the quantity of columns of the interleaving block is 6), and 1 (that is, the first indication information, indicating that the quantity of columns occupied by each piece of information in the interleaving block is 1).

In a possible implementation #3, the interleaving parameter includes a third parameter and a fourth parameter, the third parameter indicates a quantity of TB groups included in the first information, and the fourth parameter indicates an interval between two adjacent TB groups.

It should be understood that, when a plurality of pieces of information are interleaved for transmission, one piece of information (for example, the first information) in the plurality of pieces of information is split into a plurality of TB groups for transmission, and each TB group may include at least one TB. An interval between two adjacent TB groups (denoted as a first TB group and a second TB group) in the same piece of information may be a quantity of TBs or a quantity of time domain units (for example, slots or symbols) between a start time domain position of the first TB in the first TB group and a start time domain position of the first TB in the second TB group, or may be a quantity of TBs or a quantity of time domain units between an end time domain position of the last TB in the first TB group and an end time domain position of the last TB in the second TB group.

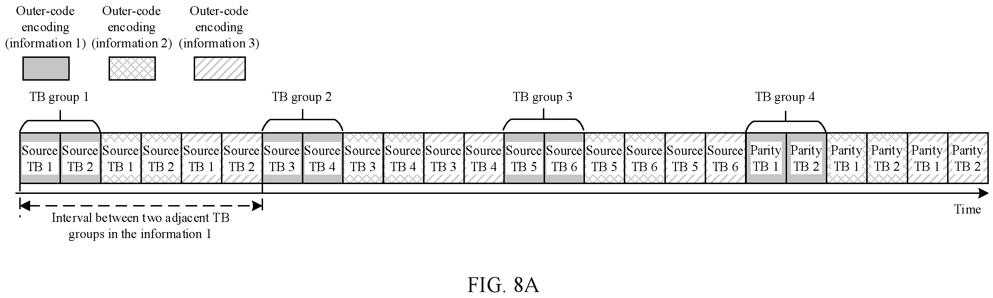

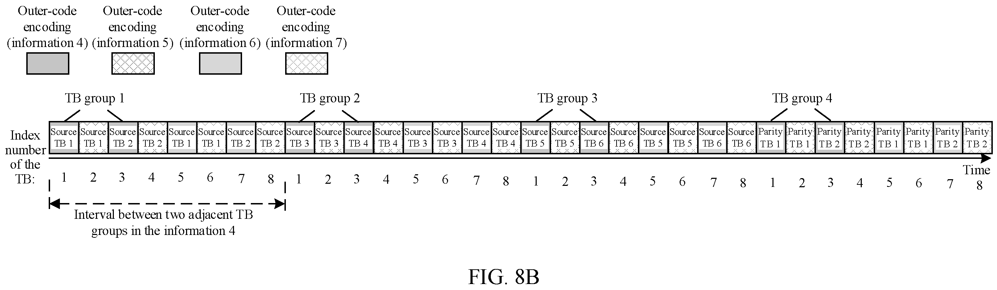

For example, FIG. 8A and FIG. 8B are another diagram of interleaving according to this application. In FIG. 8A, information 1 to information 3 each include eight TBs. The information 1 is used as an example for description. In an interleaved transmission process, the information 1 is split into four TB groups (that is, a TB group 1 to a TB group 4 in FIG. 8A), and an interval between two adjacent TB groups included in the information 1 is six TBs. In this case, the TB-wise interleaving parameter includes 4 (that is, the third parameter, indicating that each piece of information that is interleaved for transmission includes four TB groups) and 6 (that is, the fourth parameter, indicating that an interval between two adjacent TB groups of the same information is six TBs).

In a possible implementation #4, the TB-wise interleaving parameter includes the third parameter, the fourth parameter, and second indication information, where the second indication information indicates a quantity of TBs included in each TB group in the first information, or the second indication information indicates a position of a TB included in each TB group in the first information.

In other words, in the implementation #4, in addition to indicating the quantity of TB groups included in each piece of interleaved information and the interval between two adjacent TB groups that belong to the same information, the TB-wise interleaving parameter further indicates a quantity of or positions of TBs included in each TB group in each piece of information. When the quantity of TBs included in each TB group in a piece of interleaved information (for example, the first information) is greater than or equal to 2, the plurality of TBs included in each TB group in the first information may be consecutive (or adjacent) in the time domain, or may be inconsecutive in the time domain. This is not specifically limited in this application. For example, when the plurality of TBs included in each TB group in the first information are consecutive in the time domain, the second indication information indicates a quantity of TBs included in each TB group in the first information. When the plurality of TBs included in each TB group in the first information are inconsecutive in the time domain, the second indication information indicates a position of a TB included in each TB group in the first information. For example, the second indication information is an index of a TB included in each TB group in the first information.

For example, in FIG. 8A, the information 1 to the information 3 are interleaved for transmission, and TBs included in each TB group in the same information are consecutive. The information 1 is used as an example for description. The information 1 is split into four TB groups (that is, a TB group 1 to a TB group 4 in FIG. 8A) in an interleaved transmission process. An interval between two adjacent TB groups included in the information 1 is six TBs. Each TB group in the information 1 includes two TBs. In this case, the TB-wise interleaving parameter includes 4 (that is, the third parameter, indicating that each piece of information that is interleaved for transmission includes four TB groups), 6 (that is, the fourth parameter, indicating that an interval between two adjacent TB groups of the same information is six TBs), and 2 (that is, the second indication information, indicating that a quantity of TBs included in each TB group is 2).

For another example, in FIG. 8B, information 4 to information 7 are interleaved for transmission, TBs included in each TB group in the same information are inconsecutive, and indexes of TBs included in each TB group in the same information are the same. The information 4 is used as an example for description. The information 4 is split into four TB groups (that is, a TB group 1 to a TB group 4 in FIG. 8B) in an interleaved transmission process. An interval between two adjacent TB groups in the information 4 is eight TBs. Each of the TB group 1 to the TB group 4 includes a TB whose index is 1 and a TB whose index is 3. In this case, the TB-wise interleaving parameter includes 4 (that is, the third parameter, indicating that each piece of information that is interleaved for transmission includes four TB groups) and 8 (that is, the fourth parameter, indicating that an interval between two adjacent TB groups of same information is eight TBs), and content indicated by the second indication information is shown in Table 2.

**Table 2**

| Information identifier | Index of a TB included in a TB group |
|---|---|
| Information 4 | 1, 3 |
| Information 5 | 2, 4 |
| Information 6 | 5, 7 |
| Information 7 | 6, 8 |

Aspect 2: A manner in which the terminal obtains the TB-wise interleaving parameter.

It should be noted that the TB-wise interleaving parameter is from the network device, that is, it may be understood that the TB-wise interleaving parameter is determined or configured by the network device.

In a possible implementation, the TB-wise interleaving parameter is carried in at least one of the following broadcast messages: a system message (for example, a system information block (system information block, SIB) 1, a SIB 19, or the like), other system information (other system information, OSI), a master information block (master information block, MIB), or a physical broadcast channel (physical broadcast channel) message. In other words, the network device may send the TB-wise interleaving parameter to the terminal in a broadcast or multicast manner, so that the TB-wise interleaving parameter can be sent without scheduling different resources for different terminals, thereby reducing signaling overheads of scheduling resources and reducing system scheduling complexity.

In another possible implementation, the TB-wise interleaving parameter is carried in at least one piece of information of radio resource control (radio resource control, RRC) signaling (for example, an RRC setup (RRCsetup) message, RRC reconfiguration signaling (RRCReconfiguration), or RRC resume signaling (RRCResume)), downlink control information (downlink control information, DCI), group DCI, or a media access control (media access control, MAC) control element (control element, CE). Alternatively, the TB-wise interleaving parameter may be sent together with downlink data, or may be carried on a physical downlink shared channel (physical downlink shared channel, PDSCH). In other words, the TB-wise interleaving parameter may be sent in a multicast manner or a unicast manner in an RRC connection establishment phase or in a data transmission process between the terminal and the network device, so that the network device can flexibly control a parameter value of an interleaving parameter corresponding to each terminal or each group of terminals. For example, the network device may configure different interleaving parameters for the terminal based on a position or an area in which the terminal is located, to help optimize communication performance of the terminal or communication performance of the system. For another example, the network device may configure different TB-wise interleaving parameters for the terminal based on a channel blocking condition of a position in which the terminal is located, to help optimize scheduling and data processing delay of each terminal or each group of terminals, and improve communication efficiency of the terminal and the system.

In a possible manner of configuring the TB-wise interleaving parameter, the network device and the terminal device may agree on or pre-store a first mapping relationship set according to a protocol. The first mapping relationship set includes a mapping relationship between a plurality of TB-wise interleaving parameters and a plurality of parameter indexes. Further, the network device may indicate a corresponding TB-wise interleaving parameter by sending a parameter index.

For example, the first mapping relationship set is shown in Table 3. The network device indicates, to the terminal based on a configuration message (for example, a broadcast message, an RRC message, DCI, or a MAC CE), that the parameter index number is 2. That the terminal determines the TB-wise interleaving parameter based on the configuration message includes: The first parameter or the third parameter is 8, the second parameter or the fourth parameter is 8, and the quantity of columns occupied in the interleaving block or the quantity of TBs in the TB group is 2.

**Table 3**

| Parameter index number | First parameter or third parameter | Second parameter or fourth parameter | A quantity of columns occupied in the interleaving block or a quantity of TBs in the TB group |
|---|---|---|---|
| 1 | 4 | 6 | 2 |
| 2 | 8 | 8 | 2 |
| 3 | 10 | 8 | 2 |
| 4 | 12 | 12 | 1 |

For another example, the first mapping relationship set is shown in Table 4. The network device indicates, to the terminal based on a configuration message, that the parameter index number is 2. That the terminal determines the TB-wise interleaving parameter based on the configuration message includes: The first parameter or the third parameter is 8, the second parameter or the fourth parameter is 8, and the index of the occupied column in the interleaving block or the index of the TB included in the TB group is 1 and 3.

**Table 4**

| Parameter index number | First parameter or third parameter | Second parameter or fourth parameter | Index of the occupied column in the interleaving block or index of the TB included in the TB group |
|---|---|---|---|
| 1 | 4 | 6 | 1, 2 |
| 2 | 8 | 8 | 1, 3 |
| 3 | 10 | 8 | 1, 2, 3, 4 |
| 4 | 12 | 12 | 1, 3, 5 |

For ease of understanding, this application further provides an implementation of pseudocode of a TB-wise interleaving parameter. An interleaved TB sequence *f*₀, *f*₁, *f*₂,...,*f*_{*E*-1} is obtained through TB-wise interleaving processing on the TB sequence *e*₀, *e*₁, *e*₂,..., *e*_{*E*-1}, and the interleaving rule is as follows:

The first parameter or the third parameter is denoted as M, the second parameter or the fourth parameter is denoted as N, the quantity E of TBs included in the interleaving block is N × M, and outer-code encoding is performed on the TB sequence *e*₀, *e*₁, *e*₂,..., *e*_{*E*-1} ; and

```
         for j = 0 to M-1//a value of the subscript j changes from 0 to M-1 in sequence
            for i = 0 to N - 1//a value of the subscript i changes from 0 to N-1 in sequence
                   fi+j·N = ei·M+j ;// ei·M+j is assigned to fi+j·N
            end for
         end for
```

Based on the foregoing TB-wise interleaving parameter, the following describes in detail a communication method and a communication apparatus provided in embodiments of this application with reference to the accompanying drawings.

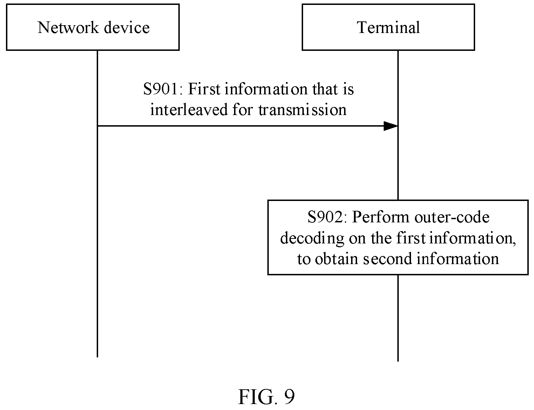

FIG. 9 is a schematic flowchart of a communication method according to an embodiment of this application. As shown in FIG. 9, the communication method includes the following step S901 and step S902. An example in which the method shown in FIG. 9 is performed by a terminal and a network device is used for description. It may be understood that the method shown in FIG. 9 may alternatively be performed by a module (for example, a chip) in the terminal and a module (for example, a chip, a CU, or a DU) in the network device.

S901: The network device sends, based on a TB-wise interleaving parameter, first information that is interleaved for transmission, where the first information includes a TB obtained by performing outer-code encoding on second information. Correspondingly, the terminal receives, based on the TB-wise interleaving parameter, the first information that is interleaved for transmission.

It may be understood that source information bits (or to-be-transmitted information) in a data transmission process of the network device and the terminal device are denoted as the second information. Outer-code encoding is performed on the second information, to obtain a plurality of TBs. The plurality of TBs may be divided into two parts: A first part is a TB corresponding to the source information bits (referred to as a source TB for short in the following, and may also be referred to as a source TB or a source information TB in this application), and a second part is a parity TB (also referred to as a parity TB in this application) generated based on the source information bits. Further, the network device sends the first information to the terminal, where the first information is interleaved for transmission based on the TB-wise interleaving parameter. In a case 1, the first information includes the source TB and the parity TB (for ease of understanding the solution, the parity TB in this case is denoted as a first parity TB). In another case 2, the first information may include only the source TB. The following separately describes the case 1 and the case 2.

Case 1: The first information includes the source TB and the first parity TB.

It may be understood that information included in the first parity TB is generated based on the second information. In addition, a quantity of first parity TBs included in the first information is determined based on a case in which a signal is affected by blocking. It should be noted that, the case in which the signal is affected by blocking may be obtained through measurement in a current communication scenario, or may be obtained through prediction and calculation based on communication characteristics (such as signal characteristics like an SNR, a bit error rate, or a transmission delay in the current communication scenario, or map information in the current communication scenario) in the current communication scenario. This is not specifically limited in this application. In a possible implementation, the case in which the signal is affected by blocking includes: a quantity of TBs affected by blocking in a signal transmission process, that is, may be understood as a quantity of TBs that may fail to be transmitted due to blocking impact; or a transmission duration affected by blocking in a signal transmission process, that is, may be understood as a time length in which transmission may fail due to blocking impact.

It should be noted that, to reduce a case in which a decoding error or data retransmission occurs due to blocking (which is also referred to as resisting the blocking impact in this application), in a process in which an interleaver performs interleaving on the first information and other information, a quantity of parity TBs included in one interleaving block is greater than or equal to the quantity of transport blocks affected by blocking, or a transmission duration of the parity TBs included in one interleaving block is greater than or equal to the transmission duration affected by blocking. In other words, when the interleaving block processed by the interleaver includes N columns, each column includes Q parity TBs, and the interleaving block includes N × Q parity TBs, a value of N × Q is greater than or equal to the quantity of transport blocks affected by blocking, or a transmission duration of the N × Q parity TBs is greater than the transmission duration affected by blocking. Both N and Q are positive integers. It may be understood that the quantity of transport blocks affected by blocking is split into a plurality of parts in an interleaved transmission manner. A quantity of parity TBs included in any piece of interleaved information (for example, the first parity TB included in the first information) is less than or equal to the quantity of transport blocks affected by blocking, or a transmission duration of the first parity TB is less than or equal to the transmission duration affected by blocking. Therefore, while resisting the blocking impact, transmission efficiency is improved (or it is understood that a quantity of first parity TBs is reduced).

For example, the quantity of transport blocks affected by blocking is six TBs. In this case, the network device may interleave the information 1 to the information 3 for transmission based on the TB-wise interleaving parameter. An interleaving block in the interleaving process may be shown in FIG. 7A. The interleaving block includes six columns, and each column includes one parity TB. The interleaving block includes six parity TBs, and a quantity of parity TBs included in any one of the information 1 to information 3 that are interleaved for transmission is 2, which is less than the quantity of transport blocks affected by blocking (that is, 6). Compared with a manner in which the information 1 to the information 3 are not interleaved for transmission, a quantity of parity TBs included in any one of the information 1 to the information 3 needs to be greater than or equal to the quantity of transport blocks affected by blocking (that is, six TBs), to resist the blocking impact, so that the quantity of parity TBs included in each piece of information can be reduced, that is, transmission efficiency can be improved.

In the case 1, the terminal may further receive third information from the network device, where the third information indicates one or more of a first quantity, a second quantity, or a start position. The first quantity indicates a quantity of TBs in the first information other than the first parity TB (that is, may be understood as a quantity of source TBs in the first information), the second quantity indicates the quantity of first parity TBs in the first information, and the start position indicates a start resource position for carrying the first information. Further, the terminal receives, based on the third information and the TB-wise interleaving parameter from the network device, the first information that is interleaved for transmission.

In an example 1, the TB-wise interleaving parameter includes a first parameter and a second parameter (that is, corresponding to the foregoing implementation #1). If the first parameter indicates that the quantity of rows of the interleaving block is 4, the second parameter indicates that the quantity of columns of the interleaving block is 6. The terminal receives the third information from the network device, where the third information indicates that the quantity of source TBs in the information 1 that is interleaved for transmission is 6, the quantity of parity TBs is 2, and indicates the start resource position of the information 1 (which may be understood as a time domain resource position of the first transmitted TB in the information 1). Further, the terminal determines, based on the eight TBs (that is, six source TBs and two parity TBs) included in the information 1 and the quantity of rows of the interleaving block, that the quantity of columns occupied by the information 1 in the interleaving block is 2 (that is, 8/4=2). It may be understood that the terminal determines that an interleaving block corresponding to the information 1 is shown in FIG. 7A, and a transmission pattern corresponding to the information 1 is shown in FIG. 8A. Further, the terminal receives, based on the start resource position of the information 1 and the transmission pattern corresponding to the information 1, the TBs included in the information 1 that is interleaved for transmission.

In an example 2, the TB-wise interleaving parameter includes a first parameter, a second parameter, and first indication information (that is, corresponding to the foregoing implementation #2). If the first parameter indicates that the quantity of rows of the interleaving block is 4, the second parameter indicates that the quantity of columns of the interleaving block is 6, and the first indication information indicates that the quantity of columns occupied by the information 1 in the interleaving block is 2. The terminal receives the third information from the network device, where the third information indicates that the quantity of source TBs in the information 1 that is interleaved for transmission is 6, and the start resource position of the information 1 (which may be understood as a time domain resource position of the first transmitted TB in the information 1). Further, based on the TB-wise interleaving parameter, the terminal may determine that the information 1 includes eight TBs (that is, the information 1 occupies two columns in the interleaving block, and each column includes four TBs), and determine, based on the quantity of source TBs indicated by the third information being 6, that the information 1 includes two parity TBs. It may be understood that the terminal determines that an interleaving block corresponding to the information 1 is shown in FIG. 7A, and a transmission pattern corresponding to the information 1 is shown in FIG. 8A. Further, the terminal receives, based on the start resource position of the information 1 and the transmission pattern corresponding to the information 1, the TBs included in the information 1 that is interleaved for transmission.

In an example 3, the TB-wise interleaving parameter includes a third parameter and a fourth parameter (that is, corresponding to the foregoing implementation #3). If the information 1 to the information 3 are interleaved for transmission, the third parameter indicates that a quantity of TB groups included in each piece of interleaved information is 4, and the fourth parameter indicates that an interval between two adjacent TB groups in the same piece of information is six TBs. The terminal receives the third information from the network device, where the third information indicates that the quantity of source TBs in the information 1 that is interleaved for transmission is 6, the quantity of parity TBs is 2, and indicates the start resource position of the information 1. Further, the terminal determines, based on the eight TBs (that is, six source TBs and two parity TBs) included in the information 1 and the quantity of TB groups included in the information 1, that each TB group in the information 1 includes two TBs (that is, 8/4=2). It may be understood that the terminal determines that a transmission pattern corresponding to the information 1 is shown in FIG. 8A. Further, the terminal receives, based on the start resource position of the information 1 and the transmission pattern corresponding to the information 1, the TBs included in the information 1 that is interleaved for transmission.

In an example 4, the TB-wise interleaving parameter includes a third parameter, a fourth parameter, and second indication information (that is, corresponding to the foregoing implementation #4). If the information 1 to the information 3 are interleaved for transmission, the third parameter indicates that the quantity of TB groups included in each piece of interleaved information is 4, the fourth parameter indicates that the interval between two adjacent TB groups in the same information is six TBs, and the second indication information indicates that each TB group in the information 1 includes two TBs. If the terminal receives the third information from the network device, the third information indicates that the quantity of parity TBs in the information 1 that is interleaved for transmission is 2, and indicates the start resource position of the information 1. Further, based on the TB-wise interleaving parameter, the terminal may determine that the information 1 includes eight TBs (that is, the information 1 includes four TB groups, and each TB group includes two TBs), and determine, based on the quantity of parity TBs indicated by the third information being 2, that the information 1 includes six source TBs. It may be understood that the terminal determines that a transmission pattern corresponding to the information 1 is shown in FIG. 8A. Further, the terminal receives, based on the start resource position of the information 1 and the transmission pattern corresponding to the information 1, the TBs included in the information 1 that is interleaved for transmission.

Case 2: The first information includes the source TB.

It may be understood that, after the network device performs outer-code encoding on the second information, to obtain the source TB and the parity TB (for ease of understanding the solution, the parity TB in this case is denoted as a second parity TB), the network device does not send the second parity TB in an initial transmission process. In other words, the first information in the case 2 is information in the initial transmission process.

In the case 2, the terminal may further receive fifth information from the network device, where the fifth information indicates a third quantity and a start resource position of the first information. The third quantity indicates a quantity of TBs included in the first information. Further, the terminal receives, based on the fifth information and the TB-wise interleaving parameter from the network device, the first information that is interleaved for transmission.

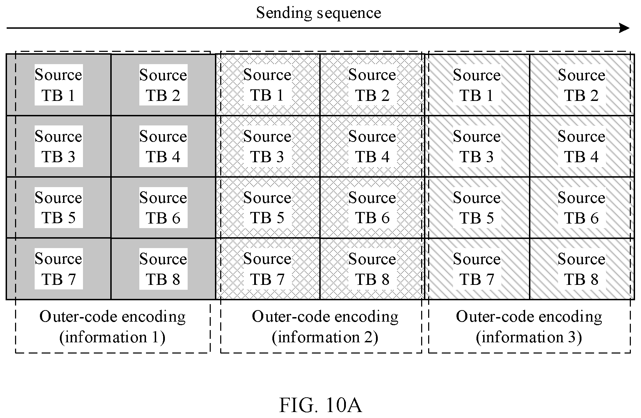

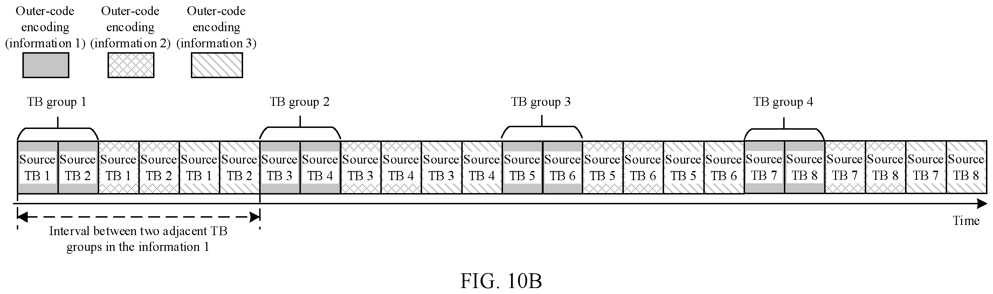

In an example 5, the TB-wise interleaving parameter includes a first parameter and a second parameter (that is, corresponding to the foregoing implementation #1). If the first parameter indicates that the quantity of rows of the interleaving block is 4, the second parameter indicates that the quantity of columns of the interleaving block is 6. The terminal receives fifth information from the network device, where the fifth information indicates that the quantity of source TBs in information 1 that is interleaved for transmission is 8, and indicate the start resource position of the information 1. Further, the terminal determines, based on the eight TBs included in the information 1 and the quantity of rows of the interleaving block, that the quantity of columns occupied by the information 1 in the interleaving block is 2 (that is, 8/4=2). It may be understood that the terminal determines that an interleaving block corresponding to the information 1 is shown in FIG. 10A, and a transmission pattern corresponding to the information 1 is shown in FIG. 10B. Further, the terminal receives, based on the start resource position of the information 1 and the transmission pattern corresponding to the information 1, the TBs included in the information 1 that is interleaved for transmission.

It may be understood that, for a process in which the network device sends the source TBs (that is, the first information in the case 2) that are interleaved for transmission in the case 2, refer to the process in which the first information that is interleaved for transmission is sent in the case 1. Details are not described herein again. A difference lies only in that, compared with the first information in the case 1, the first information in the case 2 does not include the parity TB.

With reference to the foregoing case 1 or case 2, in a possible implementation, the terminal receives third indication information from the network device, where the third indication information indicates to activate or deactivate the TB-wise interleaving parameter, or the third indication information indicates to activate or deactivate a TB-wise interleaving process, or the third indication information indicates whether to be interleaved for transmission based on the TB-wise interleaving parameter.

It should be noted that the activated TB-wise interleaving parameter mentioned in this application may also be referred to as an enabled TB-wise interleaving parameter, and the deactivated TB-wise interleaving parameter mentioned in this application may also be referred to as a disabled TB-wise interleaving parameter. It should be further noted that a sending occasion of the third indication information is not specifically limited in this application. For example, the third indication information may be sent before the terminal accesses the network device. For example, the third indication information is carried in a system message or broadcast information. For another example, the third indication information may be sent in a process in which the terminal accesses the network device. For example, the third indication information may be carried in RRC signaling, DCI signaling, or a MAC CE. For still another example, the third indication information may be sent after the terminal accesses the network device. For example, the third indication information may be carried in a PDSCH, DCI, or RRC signaling. In some application scenarios, the network device may further configure the terminal to update the TB-wise interleaving parameter. For a specific update process, refer to the foregoing descriptions of the process in which the terminal obtains the TB-wise interleaving parameter. Details are not described herein again.

S902: The terminal performs outer-code decoding on the first information, to obtain the second information.

Because the terminal is affected by blocking, the terminal may receive some or all TBs in the first information. Further, the terminal performs outer-code decoding based on some or all TBs in the first information, to obtain the second information. It may be understood that a method for performing outer-code decoding on the first information by the terminal corresponds to an outer-code encoding method applied to a process in which the network device generates the first information. For example, if the network device performs outer-code encoding on the second information by using an RS code, the terminal performs outer-code decoding on the first information by using an RS decode.

The following describes in detail a process in which the terminal obtains the second information with reference to the two cases of S901.

With reference to the case 1 in S901, after receiving the first information, the terminal performs outer-code decoding based on the source TB and/or the parity TB in the first information, to obtain the second information.

With reference to the case 2 in S901, if the terminal successfully receives all TBs in the first information, the terminal performs outer-code decoding based on the source TB in the first information, to obtain the second information; or the terminal may not perform outer-code decoding based on the source TB in the first information, to obtain the second information. If the terminal receives some TB 9 in the first information (that is, there are TBs with transmission errors in the first information), the terminal sends fourth information to the network device, where the fourth information indicates a quantity of erroneous TBs included in the first information or specifically which TBs are incorrectly decoded. Further, the network device sends a second parity TB to the terminal, where the second parity TB is generated based on the second information, and a quantity of second parity TBs is greater than or equal to the quantity of errors. After receiving the second parity TB, the terminal performs outer-code decoding based on the second parity TB and the first information (which may be understood as a TB that is successfully received by the terminal in the first information), to obtain the second information.

For example, with reference to Example 5 in S901, the network device sends information 1 (including a source TB 1 to a source TB 8) to the terminal. The terminal successfully receives the source TB 1 to the source TB 7 (that is, the source TB 1 to the source TB 7 shown in FIG. 10A), and fails to receive the source TB 8 (that is, the source TB 8 shown in FIG. 10A). In this case, the terminal sends fourth information to the network device, where the fourth information indicates that a quantity of erroneous transport blocks included in the information 1 is 1 or indicates that the source TB 8 is incorrectly decoded. The network device obtains (or generates) one parity TB (denoted as a parity TB 1) based on the fourth information, where the parity TB is generated based on the source TB 1 to the source TB 8 of the information 1. The network device sends the parity TB 1 to the terminal. After receiving the parity TB 1, the terminal performs outer-code decoding based on the parity TB 1 and the source TB 1 to the source TB 7.

It may be understood that, in the case 2, after the network device performs outer-code encoding on the second information, to obtain the source TB and the second parity TB, the network device does not send the second parity TB in an initial transmission process. When there is a TB that is incorrectly transmitted in initial transmission, the network device sends the second parity TB to the network device based on the quantity of TBs that are incorrectly transmitted (that is, the quantity of errors mentioned in this application). This helps improve transmission reliability.

It should be further noted that this application is described by using only an example in which the first information is downlink information, and this should not be considered as a specific limitation on this application. In other words, the solutions provided in this application may be further applied to an uplink transmission scenario, that is, a scenario in which uplink information is interleaved for transmission. For example, after the terminal obtains a TB-wise interleaving parameter from the network device, the terminal performs outer-code encoding on the second information, to obtain the first information, and sends the first information that is interleaved for transmission to the network device based on the TB-wise interleaving parameter. Further, the network device receives the first information based on the TB-wise interleaving parameter, and performs outer-code decoding on the first information, to obtain the second information. In this case, the TB-wise interleaving parameter applied to the uplink transmission scenario may be the same as or different from a TB-wise interleaving parameter applied to a downlink transmission scenario. This is not specifically limited in this application. In addition, the TB-wise interleaving parameter applied to the uplink transmission scenario and the TB-wise interleaving parameter applied to the downlink transmission scenario may be configured based on the same configuration message (for example, a broadcast message, an RRC message, DCI, or a MAC CE), or may be separately configured based on different configuration messages. This is not limited in this application.

In a possible scenario, the network device may indicate, based on indication information (for example, the third indication information in S901), whether to perform interleaved transmission on the downlink information based on the TB-wise interleaving parameter. The network device may further indicate, based on indication information (denoted as fourth indication information for ease of understanding), whether to perform interleaved transmission on the uplink information based on the TB-wise interleaving parameter. The fourth indication information and the third indication information may be same information, or may be different information. It may be understood that, in this scenario, the network device and the terminal may perform interleaved transmission on the downlink information based on the TB-wise interleaving parameter, but not perform interleaved transmission on the uplink information based on the TB-wise interleaving parameter; the network device and the terminal may not perform interleaved transmission on the downlink information based on the TB-wise interleaving parameter, but perform interleaved transmission on the uplink information based on the TB-wise interleaving parameter; or the network device and the terminal may perform interleaved transmission on the downlink information based on the TB-wise interleaving parameter, and perform interleaved transmission on the uplink information based on the TB-wise interleaving parameter.

In conclusion, in the method described in FIG. 9, the first information may be interleaved for transmission based on the transport block-wise interleaving parameter. After obtaining the transport block-wise interleaving parameter from the network device, the terminal receives the first information based on the interleaving parameter, and decodes the first information, to obtain the second information. Compared with a manner in which the first information is not transmitted through transport block-wise interleaving, a manner in which the first information is transmitted through transport block-wise interleaving helps reduce transport blocks, in the first information, that are affected by burst blocking, thereby improving transmission efficiency while reducing the impact of burst blocking.

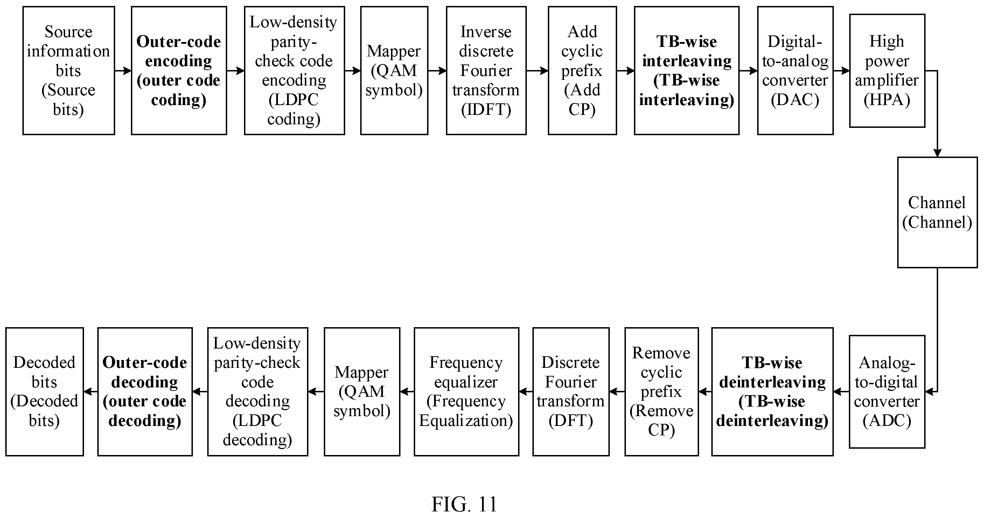

To facilitate understanding of the communication method provided in FIG. 9, this application further provides a diagram of an OFDM transmission architecture shown in FIG. 11. It should be noted that the transmission architecture shown in FIG. 11 is an example provided in this application, and should not be considered as a specific limitation on this application. For example, a TB-wise interleaving module in FIG. 11 may alternatively be after an LDPC encoding module. It should be further noted that, in addition to the OFDM transmission architecture, the communication method provided in this application may be further applied to another transmission architecture. This is not specifically limited in this application. For example, the communication method may be further applied to a DFT-S-OFDM transmission architecture, a filter bank multicarrier (filter bank multicarrier, FBMC) transmission architecture, and an orthogonal time frequency space (orthogonal time frequency space, OTFS) transmission architecture.

In FIG. 11, a transmitter performs outer-code encoding on the source information bits (that is, may be understood as the second information mentioned in FIG. 9), to obtain information (that is, may be understood as the first information mentioned in FIG. 9) obtained through outer-code encoding. Then, LDPC encoding is performed on the information obtained through outer-code encoding, and encoded information is mapped to a QAM signal via a mapper. Then, IDFT is performed on the QAM signal, the signal is transformed into time domain, and a CP is added to the signal. Further, the TB-wise interleaving module is interleaved for transmission on the signal. The interleaved transmission includes processing via a DAC, and subsequent amplification via an HPA before transmission. The signal reaches a receiver through a TN channel or an NTN channel. Correspondingly, at the receiver, a received continuous-time signal is sampled and converted to a discrete-time signal through an ADC. The signal is deinterleaved based on a TB-wise deinterleaving module, and then DFT processing is performed on the signal obtained through deinterleaving (which may be understood as the first information mentioned in FIG. 9), to transform the signal into frequency domain. After frequency-domain equalization, processing such as data LDPC decoding and outer-code decoding is performed, to obtain decoded bits.

It may be understood that, to implement functions in the foregoing embodiment, the terminal includes corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

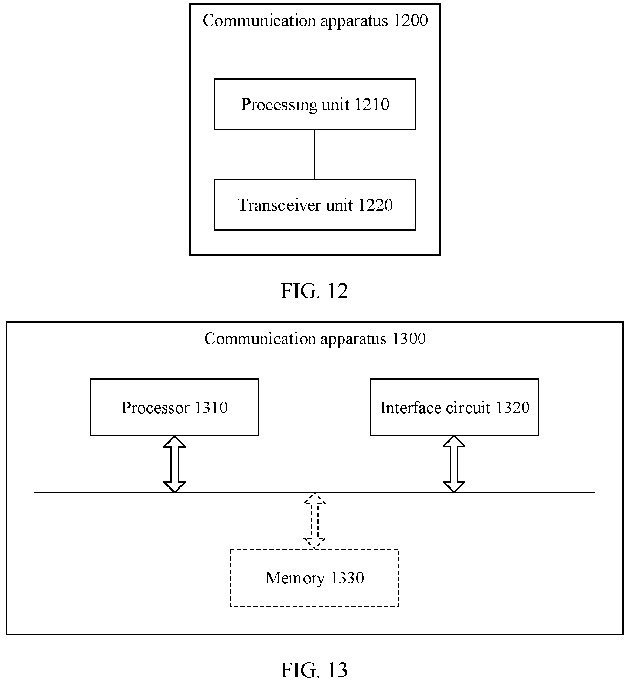

FIG. 12 and FIG. 13 are diagrams of structures of possible communication apparatuses according to embodiments of this application. The communication apparatuses may be configured to implement functions of the terminal in the foregoing method embodiments. Therefore, beneficial effect of the foregoing method embodiments can also be implemented. In embodiments of this application, the communication apparatus may be the terminal 120 shown in FIG. 1, or may be a module (for example, a chip) used in the terminal, or the communication apparatus may be the network device 110 shown in FIG. 1, or may be a module (for example, a chip) used in the network device.

As shown in FIG. 12, a communication apparatus 1200 includes a processing unit 1210 and a transceiver unit 1220. The communication apparatus 1200 is configured to implement functions of the terminal in the method embodiment shown in FIG. 9.

When the communication apparatus 1200 is configured to implement the functions of the terminal in the method embodiment shown in FIG. 9, the transceiver unit 1220 is configured to receive, based on a transport block-wise interleaving parameter, first information that is interleaved for transmission, where the first information includes a transport block obtained by performing outer-code encoding on second information, and the transport block-wise interleaving parameter is from a network device; and the processing unit 1210 is configured to perform outer-code decoding on the first information, to obtain the second information.

In a possible implementation, the first information further includes a first parity transport block, the first parity transport block is generated based on the second information, and a quantity of first parity transport blocks is less than or equal to a quantity of transport blocks affected by blocking, or a transmission duration of the first parity transport block is less than or equal to a transmission duration affected by blocking.

In a possible implementation, the transceiver unit 1220 is further configured to receive third information from the network device, where the third information indicates one or more of a first quantity, a second quantity, or a start position, the first quantity indicates a quantity of transport blocks in the first information other than the first parity transport block, the second quantity indicates the quantity of first parity transport blocks in the first information, and the start position indicates a start resource position of the first information.

In a possible implementation, the processing unit 1210 is further configured to receive, based on the third information and the transport block-wise interleaving parameter, the first information that is interleaved for transmission.

In a possible implementation, the transceiver unit 1220 is further configured to send fourth information to the network device, where the fourth information indicates a quantity of erroneous transport blocks included in the first information; the transceiver unit 1220 is further configured to receive a second parity transport block from the network device, where the second parity transport block is generated based on the second information, and a quantity of second parity transport blocks is greater than or equal to the quantity of errors; and the processing unit 1210 is further configured to perform outer-code decoding on the first information and the second parity transport block, to obtain the second information.

In a possible implementation, the interleaving parameter includes a first parameter corresponding to an interleaver and a second parameter corresponding to the interleaver, the first parameter indicates a quantity of rows of an interleaving block, and the second parameter indicates a quantity of columns of the interleaving block; or the interleaving parameter includes the first parameter, the second parameter, and first indication information, where the first indication information indicates a quantity of columns occupied by the first information in the interleaving block, or the first indication information indicates a position of a column occupied by the first information in the interleaving block.

In a possible implementation, the interleaving parameter includes a third parameter and a fourth parameter, the third parameter indicates a quantity of transport block groups included in the first information, and the fourth parameter indicates an interval between two adjacent transport block groups; or the interleaving parameter includes the third parameter, the fourth parameter, and second indication information, where the second indication information indicates a quantity of transport blocks included in each transport block group in the first information, or the second indication information indicates a position of a transport block included in each transport block group in the first information.

In a possible implementation, the interleaving parameter is carried in any one of the following messages: a system message, a master information block, or a physical broadcast channel message.

In a possible implementation, the transceiver unit 1220 is further configured to receive third indication information from the network device, where the third indication information indicates to activate or deactivate the interleaving parameter, or the third indication information indicates to activate or deactivate a transport block-wise interleaving process.

For more detailed descriptions of the transceiver unit 1220 and the processing unit 1210, refer to related descriptions of the terminal in the method embodiment shown in FIG. 9.

As shown in FIG. 12, a communication apparatus 1200 includes a processing unit 1210 and a transceiver unit 1220. The communication apparatus 1200 is configured to implement functions of the network device in the method embodiment shown in FIG. 9.

When the communication apparatus 1200 is configured to implement the functions of the network device in the method embodiment shown in FIG. 9, the processing unit 1210 is configured to determine first information, where the first information includes a transport block obtained by performing outer-code encoding on second information; and the transceiver unit 1220 is configured to send, based on a transport block-wise interleaving parameter, first information that is interleaved for transmission.

In a possible implementation, the first information includes a first parity transport block, the first parity transport block is generated based on the second information, and a quantity of first parity transport blocks is less than or equal to a quantity of transport blocks affected by blocking, or a transmission duration of the first parity transport block is less than or equal to a transmission duration affected by blocking.

In a possible implementation, the transceiver unit 1220 is further configured to send third information to a terminal, where the third information indicates one or more of a first quantity, a second quantity, or a start position, the first quantity indicates a quantity of transport blocks in the first information other than the first parity transport block, the second quantity indicates the quantity of first parity transport blocks in the first information, and the start position indicates a start resource position of the first information.

In a possible implementation, the processing unit 1210 is further configured to send, based on the third information and the transport block-wise interleaving parameter, the first information that is interleaved for transmission.

In a possible implementation, the transceiver unit 1220 is further configured to receive fourth information from a terminal, where the fourth information indicates a quantity of erroneous transport blocks included in the first information; and the transceiver unit 1220 is further configured to send a second parity transport block to the terminal, where the second parity transport block is generated based on the second information, and a quantity of second parity transport blocks is greater than or equal to the quantity of errors.

In a possible implementation, the interleaving parameter includes a first parameter corresponding to an interleaver and a second parameter corresponding to the interleaver, the first parameter indicates a quantity of rows of an interleaving block, and the second parameter indicates a quantity of columns of the interleaving block; or the interleaving parameter includes the first parameter, the second parameter, and first indication information, where the first indication information indicates a quantity of columns occupied by the first information in the interleaving block, or the first indication information indicates a position of a column occupied by the first information in the interleaving block.

In a possible implementation, the interleaving parameter includes a third parameter and a fourth parameter, the third parameter indicates a quantity of transport block groups included in the first information, and the fourth parameter indicates an interval between two adjacent transport block groups; or the interleaving parameter includes the third parameter, the fourth parameter, and second indication information, where the second indication information indicates a quantity of transport blocks included in each transport block group in the first information, or the second indication information indicates a position of a transport block included in each transport block group in the first information.

In a possible implementation, the interleaving parameter is carried in any one of the following messages: a system message, a master information block, or a physical broadcast channel message.

In a possible implementation, the transceiver unit 1220 is further configured to send third indication information to the terminal, where the third indication information indicates to activate or deactivate the interleaving parameter.

For more detailed descriptions of the transceiver unit 1220 and the processing unit 1210, refer to related descriptions of the network device in the method embodiment shown in FIG. 9.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the method shown in FIG. 9, the processor 1310 is configured to implement a function of the processing unit 1210, and the interface circuit 1320 is configured to implement a function of the transceiver unit 1220.

When the communication apparatus is a chip used in a terminal, the chip in the terminal implements functions of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by the module.

When the communication apparatus is a chip used in a network device, the chip in the network device implements functions of the network device in the foregoing method embodiments. That the chip in the network device receives information from a terminal may be understood as that the information is first received by another module (for example, a radio frequency module or an antenna) in the network device, and then sent by the module to the chip in the network device. That the chip in the network device sends information to a terminal may be understood as that the information is delivered to another module (for example, a radio frequency module or an antenna) in the network device, and then sent by the module to the terminal.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving, based on a transport block-wise interleaving parameter, first information that is interleaved for transmission, wherein the first information comprises a transport block obtained by performing outer-code encoding on second information, and the transport block-wise interleaving parameter is from a network device; and
performing outer-code decoding on the first information to obtain the second information.

2. The method according to claim 1, wherein the first information further comprises a first parity transport block, the first parity transport block is generated based on the second information, and a quantity of first parity transport blocks is less than or equal to a quantity of transport blocks affected by blocking, or a transmission duration of the first parity transport block is less than or equal to a transmission duration affected by blocking.

3. The method according to claim 2, wherein the method further comprises:
receiving third information from the network device, wherein the third information indicates one or more of a first quantity, a second quantity, or a start position, the first quantity indicates a quantity of transport blocks in the first information other than the first parity transport block, the second quantity indicates the quantity of first parity transport blocks in the first information, and the start position indicates a start resource position of the first information.

4. The method according to claim 3, wherein receiving, based on the transport block-wise interleaving parameter, the first information that is interleaved for transmission comprises:
receiving, based on the third information and the transport block-wise interleaving parameter, the first information that is interleaved for transmission.

5. The method according to claim 1, wherein the method further comprises:
sending fourth information to the network device, wherein the fourth information indicates a quantity of erroneous transport blocks comprised in the first information; and
receiving a second parity transport block from the network device, wherein the second parity transport block is generated based on the second information, and a quantity of second parity transport blocks is greater than or equal to the quantity of erroneous transport blocks; and
performing outer-code decoding on the first information to obtain the second information comprises:
performing outer-code decoding on the first information and the second parity transport block to obtain the second information.

6. The method according to any one of claims 1 to 5, wherein the interleaving parameter comprises a first parameter corresponding to an interleaver and a second parameter corresponding to the interleaver, the first parameter indicates a quantity of rows of an interleaving block, and the second parameter indicates a quantity of columns of the interleaving block; or
the interleaving parameter comprises the first parameter, the second parameter, and first indication information, wherein the first indication information indicates a quantity of columns occupied by the first information in the interleaving block, or the first indication information indicates a position of a column occupied by the first information in the interleaving block.

7. The method according to any one of claims 1 to 5, wherein the interleaving parameter comprises a third parameter and a fourth parameter, the third parameter indicates a quantity of transport block groups comprised in the first information, and the fourth parameter indicates an interval between two adjacent transport block groups; or
the interleaving parameter comprises the third parameter, the fourth parameter, and second indication information, wherein the second indication information indicates a quantity of transport blocks comprised in each transport block group in the first information, or the second indication information indicates a position of a transport block comprised in each transport block group in the first information.

8. The method according to any one of claims 1 to 7, wherein the interleaving parameter is carried in any one of the following messages: a system message, a master information block, or a physical broadcast channel message.

9. The method according to any one of claims 1 to 8, wherein the method further comprises:
receiving third indication information from the network device, wherein the third indication information indicates to activate or deactivate the interleaving parameter, or the third indication information indicates to activate or deactivate a transport block-wise interleaving process.

10. A communication method, wherein the method comprises:
determining first information, wherein the first information comprises a transport block obtained by performing outer-code encoding on second information; and
sending, based on a transport block-wise interleaving parameter, first information that is interleaved for transmission.

11. The method according to claim 10, wherein the first information comprises a first parity transport block, the first parity transport block is generated based on the second information, and a quantity of first parity transport blocks is less than or equal to a quantity of transport blocks affected by blocking, or a transmission duration of the first parity transport block is less than or equal to a transmission duration affected by blocking.

12. The method according to claim 10 or 11, wherein the method further comprises:
sending third information to a terminal, wherein the third information indicates one or more of a first quantity, a second quantity, or a start position, the first quantity indicates a quantity of transport blocks in the first information other than the first parity transport block, the second quantity indicates the quantity of first parity transport blocks in the first information, and the start position indicates a start resource position of the first information.

13. The method according to claim 12, wherein sending, based on the transport block-wise interleaving parameter, the first information that is interleaved for transmission comprises:
sending, based on the third information and the transport block-wise interleaving parameter, the first information that is interleaved for transmission.

14. The method according to claim 10, wherein the method further comprises:
receiving fourth information from a terminal, wherein the fourth information indicates a quantity of erroneous transport blocks comprised in the first information; and
sending a second parity transport block to the terminal, wherein the second parity transport block is generated based on the second information, and a quantity of second parity transport blocks is greater than or equal to the quantity of errors.

15. The method according to any one of claims 10 to 14, wherein the interleaving parameter comprises a first parameter corresponding to an interleaver and a second parameter corresponding to the interleaver, the first parameter indicates a quantity of rows of an interleaving block, and the second parameter indicates a quantity of columns of the interleaving block; or
the interleaving parameter comprises the first parameter, the second parameter, and first indication information, wherein the first indication information indicates a quantity of columns occupied by the first information in the interleaving block, or the first indication information indicates a position of a column occupied by the first information in the interleaving block.

16. The method according to any one of claims 10 to 14, wherein the interleaving parameter comprises a third parameter and a fourth parameter, the third parameter indicates a quantity of transport block groups comprised in the first information, and the fourth parameter indicates an interval between two adjacent transport block groups; or
the interleaving parameter comprises the third parameter, the fourth parameter, and second indication information, wherein the second indication information indicates a quantity of transport blocks comprised in each transport block group in the first information, or the second indication information indicates a position of a transport block comprised in each transport block group in the first information.

17. The method according to any one of claims 10 to 16, wherein the interleaving parameter is carried in any one of the following messages: a system message, a master information block, or a physical broadcast channel message.

18. The method according to any one of claims 10 to 17, wherein the method further comprises:
sending third indication information to the terminal, wherein the third indication information indicates to activate or deactivate the interleaving parameter.

19. A communication apparatus, comprising a module configured to perform the method according to any one of claims 1 to 9, or comprising a module configured to perform the method according to any one of claims 10 to 18.

20. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 9 through a logic circuit or by executing code instructions, or the processor is configured to implement the method according to any one of claims 10 to 18 through a logic circuit or by executing code instructions.

21. A computer-readable storage medium, wherein the storage medium stores a computer program or instructions, and when the computer program or instructions are executed by a communication apparatus, the communication apparatus is caused to implement the method according to any one of claims 1 to 9 or to implement the method according to any one of claims 10 to 18.

22. A computer program product, wherein the computer program product comprises a computer program or instructions, and when the computer program or the instructions are executed by a communication apparatus, the communication apparatus is caused to implement the method according to any one of claims 1 to 9 or to implement the method according to any one of claims 10 to 18.
